# EUROPÄISCHE PATENTSCHRIFT

(11) **EP 1 006 376 B1**
(45) Veröffentlichungstag und Bekanntmachung des Hinweises auf die Patenterteilung: **05.01.2005**
(21) Anmeldenummer: 99122275.3
(22) Anmeldetag: 09.11.1999
(51) Int. Cl.: G02B 6/04, G02B 6/06, G02B 6/40

(54) **Verfahren zum Herstellen von Lichtleitfaserbündeln sowie Vorrichtung zur Durchführung des Verfahrens**
Method of fabricating optical fibre bundle, and apparatus for carrying out the method
Procédé de fabrication d'un faisceau de fibres optiques, et dispositif pour la mise en oeuvre du procédé

(30) Priorität: 04.12.1998 DE 19855958
(43) Veröffentlichungstag der Anmeldung: 07.06.2000
(73) Patentinhaber: Schott AG, 55122 Mainz (DE)
(72) Erfinder: Meinl, Jürgen, 65329 Hohenstein (DE); Henrich, Thomas, 61449 Steinbach (DE)
(74) Vertreter: Fuchs Mehler Weiss & Fritzsche

(56) Entgegenhaltungen:
- DE-A- 2 630 730
- DE-A- 19 604 678
- DE-C- 3 744 367
- PATENT ABSTRACTS OF JAPAN vol. 006, no. 121 (P-126), 6. Juli 1982 (1982-07-06) & JP 57 046210 A (FUJITSU LTD), 16. März 1982 (1982-03-16)

## Beschreibung

Die Erfindung bezieht sich auf das Herstellen eines Lichtleitfaserbündels, das aus einer Vielzahl von Einzelfasern aus Glas besteht, die am Ende in einer gemeinsamen metallischen Hülse, unter Aufbringung von Temperatur und Druck, umformend miteinander verpreßt werden.

Die Erfindung betrifft auch eine Vorrichtung zur Durchführung dieses Verfahrens.

Zur Lichtübertragung werden häufig flexible Lichtleiter, bestehend aus einer Vielzahl von Einzelfasern aus Glas, sogenannte Lichtleitfaserbündel, verwendet. Die Einzelfasern sind üblicherweise in einem gemeinsamen Ende in einer Hülse zusammengefaßt, welches beispielsweise in einer zur Beleuchtung dienenden Lichtquelle fixiert ist.

Das Zusammenfassen der Einzelfasern in dem gemeinsamen Ende zu einem Bündel bedarf besonderer fertigungstechnischer Aufmerksamkeit.

Gemäß dem Stand der Technik ist es bekannt, die Einzelfasern durch Verkleben miteinander und mit einer aufgeschobenen Hülse zu verbinden. Dies weitverbreitete Verfahren hat die Nachteile, daß der verwendete Kleber die Temperaturbeständigkeit begrenzt, die Packungsdichte und damit die optische Transmission beschränkt ist, weil die Einzelfasern ihren kreisrunden Querschnitt behalten und sich daher nur punktweise mit Freiräumen berühren, sowie in der begrenzten chemischen Beständigkeit, was ebenfalls den Anwendungsbereich einengt.

Es sind auch Verfahren bekannt, bei denen die Einzelfasern in einer gemeinsamen Hülse untereinander und mit der Hülse verschmolzen sind.

Die Vorteile eines derartig hergestellten Lichtleitfaserbündel-Endes liegen vor allem in der höheren Temperaturbeständigkeit (kleberfrei), der höheren Transmission, weil mehr Einzelfasern im vorhandenen Querschnitt durch die beim verpreßten Verschmelzen entstehende hexagonale Packung liegen, und der besseren chemischen Beständigkeit, was sich insbesondere bei der Thermodesinfektion und generell bei der Sterilisation für medizinische Anwendungen mit Vorteil bemerkbar macht.

Durch die DE- 26 30 730 A1 sind Verfahren bekannt geworden, bei welchen eine Hülse wärmeweich auf das Lichtleitfaserbündel aufgepreßt wird. Hierbei werden die Einzelfasern hexagonal verformt und weisen keine Zwischenräume untereinander auf. Zu einer Verschmelzung zwischen den Einzelfasern kommt es bei diesem Verfahren jedoch nicht.

Wegen der niederviskosen Eigenschaften von Glashülsen kommen diese bevorzugt zum Einsatz. Dabei treten insbesondere folgende Nachteile auf:
- Bei Verwendung von Glashülsen kommt es zu Anglasungen (Verschmutzung und Defekten) von Umformungswerkzeugen.
- Bei Verwendung von Glashülsen sind die Lichtleiterenden extrem schlag- und stoßempfindlich (Gefahr von Abplatzungen).

Bei dem bekannten Verfahren können prinzipiell auch Metallhülsen mit glasähnlichen thermischen und Viskositätseigenschaften, d.h. sogenannte wärmeweiche Metalle, eingesetzt werden.

Solche wärmeweichen Metalle weisen jedoch eine mangelhafte thermische und mechanische Belastbarkeit auf und sind in der Praxis nicht verwendbar.

Zum Schutz der Glashülse sieht das bekannte Verfahren vor, die Glashülse mit einer äußeren Metallhülse zu umgeben, indem die Glashülse mittels einer vorher auf das Faserbündel aufgeschobenen, verschiebbaren Preß-Metallhülse in ein formgebendes konisches Ende der äußeren Metallhülse eingeschoben und dort verpreßt wird, unter Verbindung der Glashülse (und der Preß-Metallhülse) mit der äußeren Metallhülse durch Verkleben oder erweichtes Glas.

Eine derartige Ausbildung des Endes des Lichtleiterfaserbündels hat jedoch gravierende Nachteile:
- Die äußere Metallhülse muß dickwandig genug sein, um thermische Spannungen auszugleichen (Druckglaseinschmelzung). Das hat den Nachteil, daß die nutzbare optische Fläche klein ist, bezogen auf den Außendurchmesser der Metallhülse.
- Zum Einbringen der inneren Glashülse in die äußere Metallhülse wird ein zusätzliches Druckwerkzeug benötigt, welches im Lichtleiterende verbleibt. Hierbei ergeben sich Probleme bei der Zentrierung des Lichtleitfaserbündels in der erweichenden Glashülse, was sich nachteilig auf die optische Achse auswirkt.
- Beim Einbringen der inneren Glashülse in die äußere Metallhülse ergibt sich ferner keine Verschmelzzone, in welcher die Einzelfasern parallel zueinander liegen. Das konische Zusammenlaufen des Lichtleitfaserbündels zum Ende hin wirkt sich nachteilig auf die Abstrahlcharakteristik des Lichtleiters aus.
- Es sind nur Bündeldurchmesser bis maximal 10 mm herstellbar.

Das Vorsehen einer äußeren metallischen Hülse führt letztlich zu einem Abschluß des Lichtleitfaserbündels, das drei Hülsen aufweist, nämlich
- die Glashülse (oder alternativ eine metallische Hülse aus wärmeweichem Material),
- die Preß-Hülse,
- die äußere metallische Hülse,
d.h. zu einem komplexen, aufwendig herzustellendem Abschluß neben den bereits erwähnten Nachteilen.

Es kommt noch ein weiteres hinzu. Im bekannten Fall muß stets ein Formungsschritt, das Verdichten und Verjüngen des Lichtleitfaserbündels unter Druck und Wärme, dem Aufsetzen der Glashülse (oder alternativ der wärmeweichen Metallhülse) vorangehen. Das bekannte Verfahren arbeitet sozusagen zweistufig.

Aus der DE-196 04 678 A1 ist ferner ein Verfahren bekannt, bei dem die Lichtleit-Einzelfasern an den Enden des Lichtleitfaserbündels miteinander verschmolzen werden. Dazu muß das gesamte Lichtleitfaserbündel (bis zu 30 m lang) zum Verschmelzen des gemeinsamen Endes in eine Rotationsbewegung versetzt werden, was zu großen Handhabungsschwierigkeiten führt und zu Einschränkungen bei komplexeren bzw. größeren Bauteilen führt. Bei den bekannten Verfahren werden die Lichtleiterenden und Werkzeuge in einem elektrisch beheizten Ofen auf Umformtemperatur gebracht. Bei größeren Bauteildurchmessern benötigt der Verschmelzungsprozeß durchaus mehrere Stunden. Eine definierte Temperatureinstellung der zu verschmelzenden Einzelfasern ist bedingt durch die Ofenkonstruktion nicht möglich.

Der Erfindung liegt die Aufgabe zugrunde, das eingangs bezeichnete, aus der DE-26 30 730 A 1 hervorgehende Verfahren so zu führen und die eingangs bezeichnete Vorrichtung zur Durchführung des Verfahrens so auszubilden, daß auf einfache Weise und mit einfachen Mitteln ein Lichtleitfaserbündel mit verbesserten optischen Eigenschaften und einem breiteren Einsatzbereich herstellbar ist.

Die Lösung dieser Aufgabe gelingt für das Verfahren mit den Schritten:
- Einschieben des Lichtleitfaserbündels, bei dem die losen Einzelfasern provisorisch zu einem runden und dichtgepackten Bündel mechanisch zusammengehalten sind, mit Paßsitz in eine einzige metallische Hülse, die aus einem metallischen Material besteht, welches bei der Umformtemperatur des Glases eine ausreichende Warmfestigkeit aufweist, und die innen durchgehend einen kreisförmigen Querschnitt aufweist,
- Haltern des Lichtleitfaserbündels im Bereich der einzigen metallischen Hülse in einer Spannvorrichtung,
- Aufheizen des Endes des in der metallischen Hülse eingespannten Lichtleitfaserbündels auf Umformtemperatur,
- Verpressen des aufgeheizten Endes des in der metallischen Hülse eingespannten Lichtleitfaserbündels unter Umformen der Einzelfasern zu einer hexagonalen Packung und Anpressen der metallischen Hülse an diese Packung, ohne daß es zu einer Anglasung zwischen dem verschmolzenen Lichtleitfaserbündel und der metallischen Hülse kommt,
   - Abkühlen des umgeformten Endes des Lichtleitfaserbündels, und
   - Entfernen des Lichtleitfaserbündels aus der Spannvorrichtung,
   gemäß der Erfindung dadurch, daß das Lichtleitfaserbündel in der Spannvorrichtung mittels senkrecht zur axialen Richtung des Lichtleitfaserbündels verfahrbarer Spannelemente in seiner Lage fixiert wird und auf das feststehende Ende des Lichtleitfaserbündels ein gleichzeitig als Heizelement dienendes Umformwerkzeug aufgesetzt wird, das nach Erreichen der Umformtemperatur unter Verpressen des Endes des Lichtleitfaserbündels axial abwärts bewegt wird.

Hinsichtlich der eingangs bezeichneten Vorrichtung zur Durchführung des Verfahrens gelingt die Lösung der Aufgabe mit
- einer Spannvorrichtung enthaltend senkrecht zur axialen Richtung des Lichtleitfaserbündels verfahrbare, unmittelbar an der einzigen Hülse, die aus einem metallischen Material besteht, welches bei der Umformtemperatur eine ausreichende Warmfestigkeit aufweist, angreifende Spannelemente zum lagefixierten Haltern des Lichtleitfaserbündels, das, mechanisch, provisorisch zusammengehalten, in die Hülse eingeschoben ist,
- einem axial verfahrbaren, mit einem sich in Verform-Verfahrrichtung verjüngenden Innendurchmesser versehenen, auf das feststehende Ende des in der Hülse eingeschobenen Lichtleitfaserbünds aufsetzbaren hohlen Umformwerkzeug , dem eine induktive Beheizung zugeordnet ist, und dessen Innenkontur so ausgebildet ist, daß durch die Verform-Verfahrbewegung des Umformwerkzeuges das Ende des umgeformten Lichtleitfaserbündels mit der metallischen Hülse in vorgegebener Weise verpreßbar ist.

Die Erfindung verwendet somit gegenüber der DE-26 30 730 A 1 keine Glashülsen, sondern eine metallische Hülse, die aus einem Material besteht, welches bei der Umformungstemperatur des Glases eine ausreichende Warmfestigkeit aufweist, d.h. ein Material, das im bekannten Fall nicht anwendbar wäre, denn dort müssen es gerade wärmeweiche Metalle sein.

Im Fall der Erfindung wird dabei nur eine einzige Hülse aus dem warmfesten Metall verwendet, die innen einen durchgehend kreisförmigen Querschnitt aufweist, d.h. ein Hohlzylinder ist und die nur einem einzigen Verpreßvorgang ausgesetzt ist, da das, lediglich mechanisch zusammengehaltene, Faserbündel direkt, d.h. ohne vorhergehenden Verformungsschritt, in die einzige metallische Hülse aus warmfestem Material zum Verpressen eingeschoben ist.

Mit den Maßnahmen gemäß der Erfindung werden nachstehende vorteilhafte Wirkungen erzielt:
- Es können Lichtleitfaserbündel mit Durchmessern bis zu 30 mm heiß verschmolzen und mit einer Endhülse versehen werden.
- Es ist ein großer optisch aktiver Durchmesser bezogen auf den Hülsenaußendurchmesser erzielbar, d. h. das Verhältnis von optisch aktivem Bündeldurchmesser zu dem Hülsenaußendurchmesser ist ≥ 0,8.
- Durch die über den gesamten Querschnitt des Lichtleitfaserbündels optimal hexagonal gepackte Einzelfasern ist eine hervorragende Transmission erzielbar, die wesentlich größer als die eines verklebten Lichtleitfaserbündels mit gleichem optisch aktiven Durchmesser ist.
- Es sind die verschiedensten Hülsenwerkstoffe einsetzbar, insbesondere korrosionsbeständige Werkstoffe, z. B. Edelstähle für Medizinanwendungen, aber auch NE-Metalle, wie beispielsweise Messing und Neusilber.
- Außer der Hülse und dem Lichtleitfaserbündel werden keine weiteren Komponenten zur Verschmelzung benötigt. Zum Herstellen des verschmolzenen Endes des Lichtleitfaserbündels müssen neben der Metallhülse und den Einzelfasern keine zusätzlichen Bauteile wie innere Glashülse oder Druckstempel eingesetzt werden, die beim Stand der Technik im Bauteil verbleiben oder durch den Prozeß verlorengehen.
- Die Länge des verschmolzenen Bereiches ist frei wählbar.
- Die Beheizung zum Verformen/Verschmelzen der Lichtleit-Einzelfaserenden kann derart ausgeführt werden, daß ein schneller und gut reproduzierbarer Umformungsprozeß gewährleistet ist. Dadurch kommt es zu einer nahezu hexagonalen Verschmelzung des gesamten Bündeldurchmessers, auch bei sehr großen Bündeldurchmessern bis 30 mm. Dies bewirkt, daß die Fasern im verschmolzenen Bereich sehr gut parallel zueinander liegen und bewirkt ferner eine sehr gute Zentrizität des verschmolzenen Bereiches, was sich insgesamt in einer verbesserten Abstrahlcharakteristik des Lichtleitfaserbündels bemerkbar macht.
- Nach dem Umformungsprozeß kommt es zu keiner festen Verbindung zwischen dem verschmolzenen Lichtleitfaserbündel und der äußeren Metallhülse. Daher ist durch ein nachträgliches Entfernen der Metallhülse auch ein Herstellen von Lichtleitfaserbündeln ohne Metallhülse möglich.
- Es kommt zu keiner Beschädigung der in der Nähe der Hülsenwandung liegenden Faserbereiche des Lichtleitfaserbündels.

Gemäß einer Weiterbildung der Erfindung wird das Verfahren nach der Erfindung so geführt, daß die metallische Hülse in dem Bereich, der dem Umformprozeß ausgesetzt ist, innen und außen mit einer Beschichtung versehen wird, die innen als Trennschicht zwischen dem umgeformten Lichtleitfaserbündel und der Hülseninnenwand und außen als Schmiermittel zwischen Hülsenaußenwand und einem Verpreßwerkzeug dient. Diese Maßnahme erleichtert auf der einen Seite den Umformprozeß mit dem entsprechenden Werkzeug und gewährleistet auf der anderen Seite eine zerstörungsfreie Ablösung der Metallhülse. Die Beschichtung erfolgt in einfacher Weise durch Eintauchen der metallischen Hülse in das Beschichtungsmaterial, das vorzugsweise durch in Ethanol suspendiertes Bornitrid gebildet wird. Es sind dabei natürlich auch andere, übliche, Beschichtungstechniken möglich sowie andere, übliche temperaturfeste Beschichtungsmaterialien, die als Trennschicht und Schmierschicht dienen können, z.B. Graphit, Gold etc..

Ein einfaches Einschieben des Lichtleitfaserbündels in die metallische Hülse ist erzielbar, wenn das Bündeln der das Lichtleitfaserbündel bildenden Einzelfasern vor dem Einschieben in die metallische Hülse provisorisch mittels eines Bündel-Hilfsmittels (z.B. Klebeband, Schnur, Draht, Kabelbinder) derart erfolgt, daß das Bündelmittel beim Einschieben in die metallische Hülse leicht manuell entfernt werden kann oder selbsttätig durch die Hülse abgestreift wird. Diese sehr vorteilhafte Montagetechnik kann auch durch andere Maßnahmen ersetzt werden, ohne daß der Rahmen der Erfindung verlassen würde.

Ein schneller und gut reproduzierbarer Umformungsprozeß läßt sich erzielen, wenn das Autheizen des Endes des eingeschobenen Lichtleitfaserbündels auf Umformungstemperatur durch induktiv erzeugte Wärme aufgebracht wird, indem mittelbar ein mit dem Ende in Kontakt stehendes metallisches Heizelement induktiv erwärmt wird. Die Umformungstemperatur liegt dabei vorzugsweise im Bereich von 600 bis 700° C, einer Temperatur, bei der die metallischen Werkstoffe der Hülse noch warmfest sind, damit es zu keiner festen Verbindung zwischen den verschmolzenen Faserbündeln und der äußeren Metallhülse kommt.

Grundsätzlich sind neben der induktiven Wärmeerzeugung auch andere Verfahren zur Erzeugung der notwendigen Umformungstemperatur möglich, wobei jedoch die induktive Wärmeerzeugung eine Reihe von weiteren Vorteilen erbringt. So kann beispielsweise gemäß einer weiteren Ausgestaltung der Erfindung das Abkühlen des umgeformten Endes des Lichtleitfaserbündels durch allmähliche Reduzierung der zugeführten induktiven Leistung erfolgen und es ist weiterhin möglich, das Heizelement zur mittelbaren Erwärmung des Lichtleitfaserbündels zugleich zum Verpressen durch Aufpressen dieses Heizelementes, das eine vorgegebene Innenkontur besitzt, zu verwenden. Dadurch ist es möglich, daß zum Erhitzen des Endes des eingeführten Lichtleitfaserbündels auf Umformungstemperatur und zum Verpressen des so erhitzten Endes und zum Abkühlen dasselbe Umformwerkzeug verwendet wird.

Gemäß einer Weiterbildung der Erfindung ist die Vorrichtung zur Durchführung des Verfahrens so ausgebildet, daß die Innenkontur des Umformwerkzeuges vom offenen Ende aus zunächst einen zylindrischen Abschnitt, dessen Durchmesser nur geringfügig größer als der Außendurchmesser des das Ende des Lichtleitfaserbündel aufnehmenden Bereiches der metallischen Hülse ist, aufweist, daran anschließend einen konischen Abschnitt besitzt, an den sich ein zweiter zylindrischer Abschnitt anschließt, dessen Durchmesser dem geforderten Durchmesser des umgeformten Lichtleitfaserbündels entspricht. Durch diese Maßnahme ist es möglich, das Umformwerkzeug je nach seiner axialen Stellung zu dem Ende des Lichtleitfaserbündels für die verschiedenen Schritte des Umformvorganges zu verwenden.

Da wegen des Verpreßvorganges der konische und der zweite zylindrische Abschnitt besonders beansprucht sind, werden die Oberflächen dieser Abschnitte vorzugsweise gehärtet und poliert.

Um über den gesamten Querschnitt des Lichtleitfaserbündels optimal hexagonal gepackte Einzelfasern zu erhalten, ist das vorgenannte Umformwerkzeug so ausgebildet, daß der Innendurchmesser des zweiten zylindrischen Abschnittes dem Durchmesser des Faserbündels abzüglich der zwischen den Fasern bestehenden Hohlräume entspricht, d.h. bei üblichem Einzelfaser-Durchmesser von ca. 30 µm bis 150 µm ca. 85 % des Ausgangsdurchmessers der metallischen Hülse beträgt.

Falls Endhülsen mit besonders kleinem Durchmesser gefordert sind, kann der Durchmesser des zweiten zylindrischen Abschnittes noch verkleinert werden, wobei dann ein Teil des Fasermaterials, insbesondere der Fasermantel, aus der Hülse herausgequetscht wird. Das genaue Ausmaß hängt von der Natur und dem Aufbau der Einzelfaser ab und muß von Fall zu Fall ermittelt werden. Im allgemeinen kann der Innendurchmesser jedoch problemlos um etwa 10 % vermindert werden.

Um eine sehr gute reproduzierbare Prozeßsteuerung, d. h. einen entsprechend reproduzierbaren Umformungsprozeß zu haben, ist gemäß einer anderen Ausgestaltung der Erfindung ein Temperaturregler für die Einstellung der Umformtemperatur im Bereich des Umformwerkzeuges vorgesehen.

Zur sicheren Aufnahme der Umformkräfte besitzt die metallische Hülse gemäß einer Weiterbildung der Erfindung einen dickwandigen Abschnitt mit einem angeformten Element für eine formschlüssige Aufnahme in der Spannvorrichtung. Das umzuformende Ende des Lichtleitfaserbündels ist dabei in einem dünnwandigen Abschnitt der Metallhülse aufgenommen, welcher durch seine Dünnwandigkeit dem thermischen Umformprozeß nicht hinderlich im Wege steht.

Gemäß einer Ausgestaltung der Erfindung besteht das Hülsenmaterial vorzugsweise aus einem korrosionsfesten Edelstahl oder einer Nickel-Eisen-Legierung. Auch andere metallische Werkstoffe mit entsprechend hoher Wärmefestigkeit sind jedoch verwendbar, die sich insbesondere nach dem vorgesehenen Anwendungsbereich des Lichtleitfaserbündels bestimmen.

Weitere Ausgestaltungen und Vorteile der Erfindung ergeben sich anhand der Beschreibung eines in den Zeichnungen dargestellten Ausführungsbeispieles. Es zeigen:
- Fig. 1: in einer schematischen Schnittansicht das in einer metallischen Hülse eingesetzte Lichtleitfaserbündel, das in eine Spannvorrichtung aufgenommen ist, mit einem auf das Ende des Lichtleitfaserbündels aufgesetzten Umformwerkzeug,
- Fig. 2A und Fig. 2B: die Beschichtung eines Teils der metallischen Hülse mit zwei verschiedenen Ausführungsformen der Ausbildung der Hülse zur Aufnahme in der Spannvorrichtung,
- Fig. 3: in drei Teilansichten A, B und C die verschiedenen Stufen der Montage des Lichtleitfaserbündels in der metallischen Hülse unter Verwendung eines Filamentes als Montagehilfe, und
- Fig. 4: in einer Schnittdarstellung die Ausbildung des Umformwerkzeuges mit einer speziellen Innenkontur.

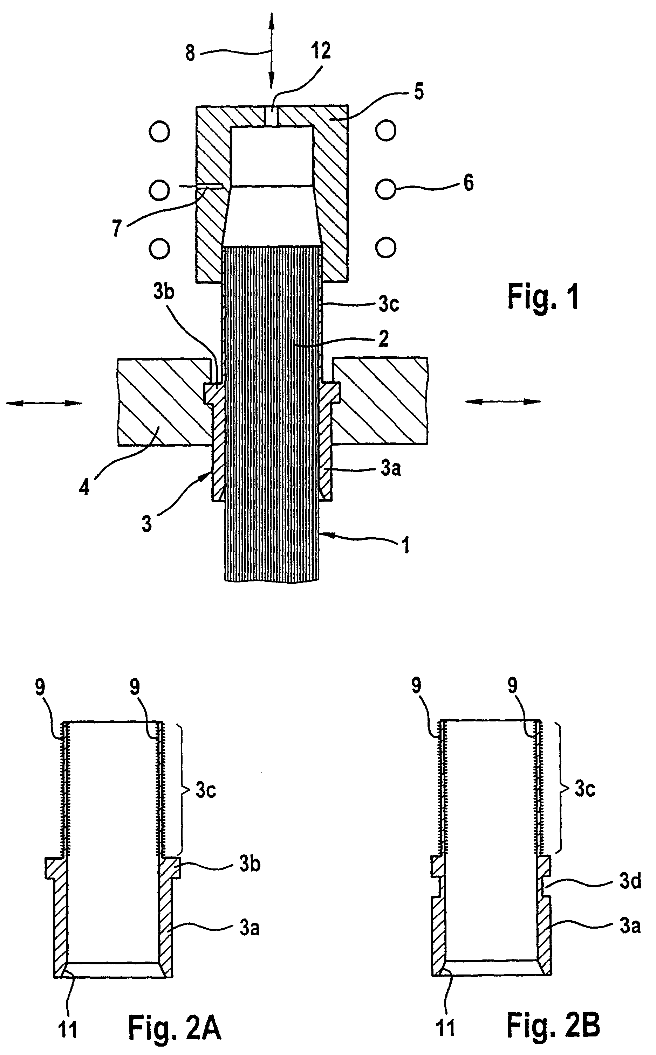

Anhand der Fig. 1 wird das Verfahren nach der Erfindung zunächst generell beschrieben.

In dieser Fig. 1 ist ein Lichtleitfaserbündel 1 schematisch dargestellt, welches aus einer Vielzahl von Lichtleit-Einzelfasern 2 besteht, deren Ende miteinander verschmolzen werden sollen. Zu diesem Zweck wird zunächst eine Metallhülse 3, die aus einem dickwandigen Abschnitt 3a mit einem umlaufenden Kragen oder Bund 3b und einem dünnwandigen Abschnitt 3c besteht, auf das Lichtleitfaserbündel 1 aufgeschoben. Die einzelnen Fasern 2 schließen dabei bündig mit dem oberen Rand der Metallhülse 3 bzw. ihres dünnwandigen Abschnittes 3c ab.

Die mit dem Lichtleitfaserbündel 1 versehene Metallhülse 3 wird danach mittels einer horizontal verfahrbaren Spannvorrichtung 4 in axialer und radialer Richtung fixiert, unter Formschluß mit dem Bund 3b.

Danach wird ein gleichzeitig als Heizelement dienendes Umformwerkzeug 5 auf die fixierte Metallhülse 3 aufgesetzt.

Mit einer induktiven Beheizung 6 wird das Umformwerkzeug 5 auf eine für das Glas charakteristische Umformtemperatur von ca. 650° c gebracht. Die Erwärmung des Lichtleitfaserbündels 1 erfolgt indirekt über die vom Umformwerkzeug 5 ausgehende Wärmestrahlung und -leitung. Die dabei benötigte Umformtemperatur wird aktiv über eine Temperaturerfassung 7 gemessen. Bei Erreichen der notwendigen Umformtemperatur wird das Umformwerkzeug 5 durch eine axiale Abwärtsbewegung auf die Metallhülse 3 und damit auch auf das Lichtleitfaserbündel 1 mit der Umformkraft 8 aufgepreßt. Die Metallhülse 3 und das Lichtleitfaserbündel 1 nehmen dabei die Innenkontur des Umformwerkzeuges 5 an.

Nach dem Umformprozeß wird das Umformwerkzeug 5 von der Metallhülse 3 abgezogen, so daß kein Kontakt mehr zwischen der Metallhülse 3 und dem Umformwerkzeug 5 besteht. Das Umformwerkzeug 5 verharrt dabei zunächst in einer Position, derart, daß es schützend über der eingefaßten Metallhülse 3 sitzt.

Im Anschluß erfolgt eine Abkühlphase, bei welcher das Umformwerkzeug 5 und das umgeformte Ende des Lichtleitfaserbündels 1 auf eine Temperatur < < Tg herunter gekühlt werden.

Nach der Beendigung der Abkühlphase wird das Umformwerkzeug 5 vollständig von dem umgeformten Ende des Lichtleitfaserbündels 1 entfernt und dieses aus der Spannvorrichtung 4 ausgebaut.

Im folgenden wird das Verfahren in einzelne Prozeßschritte zerlegt. Die detaillierte Beschreibung erfolgt dabei anhand der einzelnen Schritte.

Diese Prozeßschritte sind:
1. Metallhülse 3 beschichten
2. Lichtleitfaserbündel 2 in Metallhülse 3 montieren
3. Einbau Lichtleitfaserbündel 1 in Spannvorrichtung 4
4. Induktives Aufheizen des Umformwerkzeuges 5 mittels der Heizung 6
5. Umformen Lichtleitfaserbündel 1
6. Abkühlen Lichtleitfaserbündel 1
7. Ausbau Lichtleitfaserbündel 1 aus Spannvorrichtung 4.

### Erster Schritt: Metallhülse beschichten

Dieser Schritt ist in den Figuren 2A und B dargestellt.

Ausgangsprodukt ist die Metallhülse 3. Sie hat nachstehende Funktionen:
- Stabilisierung und Schutz des Lichtleitfaserbündel-Endes
- Trennung von Umformwerkzeug und Lichtleitfaserbündel
- Mechanische Aufnahme und Schutz des Lichtleitfaserbündels-Endes

Dabei dient der Bund 3b oder alternativ, wie in Fig. 2B gezeigt, eine Nut 3d zum Abfangen der Umform- bzw. Abziehkraft des Umformungswerkzeuges 5.

Der dünnwandige Teil 3c der Hülse 3 besitzt eine Wandstärke von 0,2 bis 1,0 mm, vorzugsweise 0,5 mm.

Als Metalle für das Hülsenmaterial kommen solche mit bei der Umformtemperatur (ca. 600 bis 700° C) ausreichend hohe Warmfestigkeit besitzende, vorzugsweise korrosionsfeste Edelstähle in Betracht. Weiterhin können Metalle mit ähnlichen Wärmeausdehnungskoeffizienten wie die eingesetzten Glasfasern, vorzugsweise Nickel/Eisen-Legierungen verwendet werden.

Die Metallhülse 3 wird danach in ihrem dünnwandigen Abschnitt 3c, innen wie außen, mit einer Beschichtung 9 versehen, was in den Figuren 2A und 2B symbolisch durch Punkte angedeutet ist.

Diese Beschichtung 9 hat folgende Funktionen:
- Trennschicht zwischen dem verschmolzenen, umgeformten Ende des Lichtleitfaserbündels 1 und umgeformter Wand der Metallhülse 3
- Schmierfunktion zwischen der Wandung der Metallhülse 3 und der Innenkontur des Umformwerkzeuges 5.

Das Material für die Beschichtung 9 muß dabei folgende Eigenschaften aufweisen:
- Temperaturbeständigkeit bis mindestens 800° C
- Homogene Schicht (< 0,02 mm) auf der Innen- und Außenkontur der Wandung der Hülse
- Gute Abriebfestigkeit auf dem Hülsenmaterial
- Nichtanglasende Eigenschaften
- Gute tribologische Eigenschaften zwischen Metallen bei Temperaturen bis mindestens 800° C
- Leichte Reinigungsmöglichkeit der Metallhülse nach dem Umformungsprozeß von dem Trennmittel
- Als Material für die Beschichtung 9 wird vorzugsweise Bornitridpulver in Lösung gebracht, wobei als Lösungsmittel vorzugsweise Ethanol verwendet wird. Neben den genannten Komponenten wird bei dem Beschichten ein Haftvermittler zugesetzt, um die geforderte Abriebsfestigkeit zu gewährleisten.

Das Mittel für die Beschichtung 9 wird in einem geeigneten Behältnis angesetzt. Die Metallhülse 3 wird mit ihrem dünnwandigen Teil 3c in die angesetzte Lösung getaucht, mit definierter Geschwindigkeit wieder herausgezogen und zum Trocknen abgelegt. Über die Konzentration der Lösung und der Geschwindigkeit, mit welcher die Metallhülse 3 aus der Lösung herausgezogen wird, ist die Schichtdicke auf der Metallhülse 3 einstellbar.

### Zweiter Schritt: Lichtleiterfaserbündel in die Metallhülse montieren

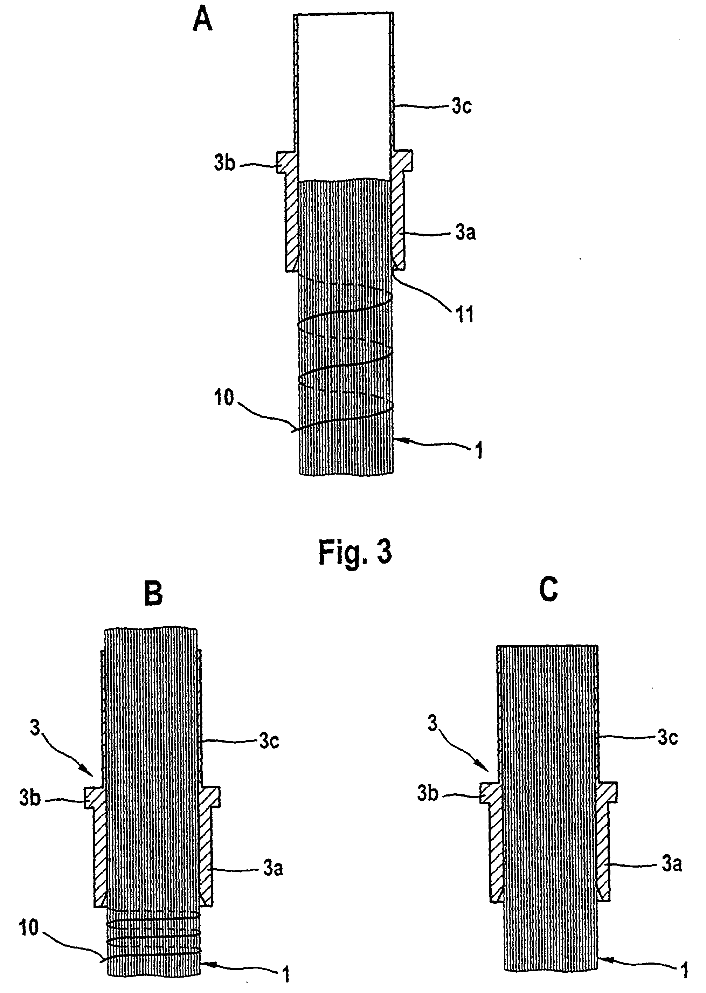

Dieser zweite Schritt ist in den Figuren 3A bis 3C dargestellt. Die Zahl der Einzelfasern, d. h. der Durchmesser des Lichtleitfaserbündels 1 ist derart zu wählen, daß es zwischen der Metallhülse 3 und dem Lichtleiterfaserbündel 1 zu einem Paßsitz kommt. Hierbei darf es zu keiner Beschädigung der außenliegenden Einzelfasern kommen. Das Lichtleitfaserbündel muß dabei frei von Verunreinigungen sein, welche beim Verschmelzungsprozeß störend wirken.

Bei der Montage werden zunächst die losen Einzelfasern mit einem eng um das Lichtleiterfaserbündel 1 gewickelten, nur schematisch dargestellten Filament 10 zu einem runden und dichtgepackten Lichtleitfaserbündel 1 zusammengehalten (Fig. 3A). Das so präparierte Lichtleitfaserbündel wird dann von hinten in die im oberen Abschnitt beschichtete Metallhülse 3 eingeschoben. Zur leichteren Montage hat dabei die Metallhülse 3 im Abschnitt 3a eine Innenfacette 11 (siehe auch die Figuren 2A und B). Beim Einschieben des Lichtleitfaserbündels 1 wird das Filament 10 zusammengeschoben (Figur 3B) oder entfernt. Anschließend wird das überstehende Faserbündel bündig mit der Metallhülse 3, d. h. bündig mit dem oberen Rand des dünnwandigen Abschnittes 3c abgeschnitten (Fig. 3C).

### Dritter Schritt: Einbau des Lichtleitfaserbündels in die Spannvorrichtung

Dieser Schritt geht aus der Figur 1 hervor. Wie bereits beschrieben, hat die in Figur 1 dargestellte Spannvorrichtung die Funktion der Fixierung der Metallhülse 3 in axialer und radialer Richtung zum Aufnehmen der benötigten Umform- bzw. Abzugskräfte 8. Zur Aufnahme der genannten Kräfte ist eine form- bzw. kraftschlüssige Fixierung der Metallhülse 3 mittels des Bundes 3b bzw. der Nut 3d (Figuren 2 und 3) vorgesehen.

### Vierter Schritt: Induktives Aufheizen über das Umformwerkzeug

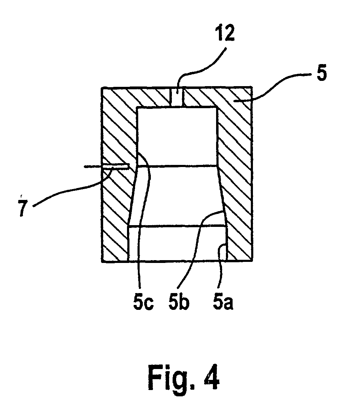

Dieser vierte Schritt ist in der Figur 4 dargestellt. Als Heizelement zum homogenen Aufheizen des Lichtleitfaserbündels 1 auf die notwendige Umformtemperatur dient das Umformwerkzeug 5, das in der Figur 4 nochmals gesondert dargestellt ist. Dieses Umformwerkzeug 5 besteht vorzugsweise aus einem magnetischen Edelstahl, welches sich induktiv mittels der Induktionsheizung 6 (siehe Figur 1) auf die notwendige Umformtemperatur aufheizen läßt. Die typische Umformtemperatur liegt bei ca. 650° C. Das Umformwerkzeug 5 ist derart ausgeführt, daß es im unteren Teil zunächst einen zylindrischen Bereich 5a aufweist, welcher einen geringfügig größeren Durchmesser aufweist als die umzuformende Metallhülse 3 in ihrem oberen dünnwandigen Abschnitt 3c. Die Durchmesserdifferenz beträgt vorzugsweise ≤ 1 mm. Die Länge des zylindrischen Bereiches 5a ist typischerweise gleich der Hälfte des Hülseninnendurchmessers, jedoch nicht kürzer als 5 mm. Der zylindrische Bereich 5a unterstützt eine homogene Aufheizung des später umgeformten Bereiches in axialer Richtung. Zur homogenen Beheizung in radialer Richtung ist das Umformwerkzeug 5 vorzugsweise an der Oberseite geschlossen, so daß die Wirkungsweise eines Ofens entsteht.

An den zylindrischen Bereich 5a schließt sich ein konischer Bereich 5b an, auf den wiederum ein zylindrischer Bereich 5c folgt.

Zum Aufheizen ist das Umformwerkzeug 5 derart auf der Metallhülse 3 positioniert, daß die dünnwandige Oberkante der Metallhülse 3 an dem konischen Bereich 5b des Umformwerkzeuges 5 anliegt. Die Aufheizzeit ist dabei derart gewählt, daß auch die in der Bündelmitte liegenden Einzelfasern eine zur Umformung ausreichende hohe Temperatur aufweisen.

Die Werkzeugtemperatur wird dabei mittels einer Temperaturerfassung 7 gemessen und entsprechend nachgeregelt.

### Fünfter Schritt: Umformen und Verschmelzen der Einzelfasern des Lichtleiterfaserbündels an dessen Ende

Dieser Verfahrensablauf geht aus den Figuren 1 und 4 hervor. Zusätzlich zu den im Schritt 4 genannten Funktionen hat das Umformwerkzeug 5 die Aufgabe, die Metallhülse 3 im oberen dünnwandigen Abschnitt 3c auf einen definierten Durchmesser umzuformen und dabei das Lichtleiterfaserbündel zu verschmelzen.

Ebenfalls zusätzlich zu den zum Schritt 4 genannten Eigenschaften hat das Umformwerkzeug 5 die folgenden charakteristischen Merkmale:

Der Flankenwinkel zwischen dem zylindrischen Bereich 5a und dem konischen Bereich 5b liegt typischerweise im Bereich von 4° bis 15°. Die Oberfläche dieses Bereiches ist vorzugsweise gehärtet und poliert. Der sich an den konischen Teil anschließende zylindrische Teil 5c weist einen Durchmesser auf, welcher derart gewählt ist, daß das Lichtleiterfaserbündel nach dem Umformungsprozeß typischerweise einen Durchmesser entsprechend 85 % des Ausgangsdurchmessers des Lichtleiterfaserbündels besitzt. Auch in diesem Bereich 5c ist die Umformwerkzeug-Oberfläche gehärtet und poliert. Wie aus Figur 4 ersichtlich ist, besitzt das Umformwerkzeug 5 an der Oberseite ein Entlüftungsloch 12, damit die beim Umformen komprimierte Luft entweichen kann.

Die Umformungsphase verläuft wie folgt:
Nach Erreichen der notwendigen Umformtemperatur aus dem Prozeßschritt 4 wird das Umformwerkzeug 5 axial auf die Metallhülse 3 gepreßt. Die axiale Werkzeuggeschwindigkeit liegt dabei im Bereich von 1 bis 20 mm/min, vorzugsweise bei 4 mm/min. Abhängig vom Verfahrweg des Umformwerkzeuges 5 lassen sich verschieden lange Verschmelzzonen realisieren.

Nach Beendigung des Umformprozesses wird das Umformwerkzeuges 5 soweit von der umgeformten Metallhülse 3 abgezogen, daß sich der umgeformte Bereich der Metallhülse 3 nicht mehr innerhalb des zylindrischen Abschnittes 5c des Umformwerkzeuges 5 befindet.

### Sechster Schritt: Abkühlen Lichtleiterfaserbündel

Das Umformwerkzeug 5 hat neben den im Schritt 4 und 5 beschriebenen Funktionen auch die Funktion der kontrollierten und spannungsarmen Abkühlung des heißumgeformten Endes des Lichtleiterfaserbündels. In dieser Abkühlphase wird das Umformwerkzeug 5 in der im fünften Schritt beschriebenen Position (das Ende des Bündels befindet sich außerhalb des Abschnittes 5c) gemäß eines vorgegebenen Temperatur/Zeitverlaufes auf eine Temperatur < < Tg, vorzugsweise auf 250° C, gebracht. Dieser Ablauf wird durch eine kontinuierlich sinkende Heizleistung der Induktionsheizung 6 (Figur 1) realisiert. Nach Erreichen der vorgegebenen Temperatur wird das Umformwerkzeug 5 in die Ausgangsposition zurückgefahren.

### Achter Schritt: Ausbau des Lichtleiterfaserbündels aus der Spannvorrichtung

Nach Öffnen der Spannvorrichtung 4 (Figur 1) wird das Lichtleiterfaserbündel 1 auf einfache Weise der Fertigungsanlage entnommen. Der Umformprozeß ist beendet.

Das Ende des Lichtleiterfaserbündels wird anschließend mit bekannten Techniken endenbearbeitet (geschliffen und poliert), um eine optische Endenflächenqualität zu erreichen.

Die mit dem beschriebenen Verfahren hergestellten Lichtleiterfaserbündel weisen gegenüber verklebten und mit anfangs beschriebenen Techniken verschmolzenen Lichtleiterenden folgende Vorteile auf:
- Großer optisch aktiver Durchmesser bezogen auf den Hülsenaußendurchmesser (Verhältnis ≥ 0,8)
- Hervorragende Transmission durch über den gesamten Querschnitt optimal hexagonal gepackte Fasern
- Großer Bündeldurchmesserbereich (1 bis 30 mm) realisierbar
- Verschiedenste Hülsenwerkstoffe einsetzbar (NE-Metalle, Edelstähle)
- Außer Hülse und Lichtleiterfaserbündel werden keine weiteren Komponenten zur Verschmelzung benötigt
- Die Länge des verschmolzenen Bereich ist frei wählbar
- Die Einzelfasern im verschmolzenen Bereich liegen sehr gut parallel zueinander
- Sehr gute Zentrizität des verschmolzenen Bereiches
- Sehr gute reproduzierbare Prozeßsteuerung durch aktive Temperaturerfassung und Steuerung des Umformwerkzeuges
- Herstellen von Lichtleitern ohne Metallhülse möglich (durch nachträgliches Entfernen der Metallhülse).

## Patentansprüche

1. Verfahren zum Herstellen eines Lichtleitfaserbündels, das aus einer Vielzahl von Einzelfasern aus Glas besteht, die am Ende in einer metallischen Hülse unter Aufbringung von Temperatur und Druck umformend miteinander verpreßt werden, mit den Schritten:
- Einschieben des Lichtleitfaserbündels, bei dem die losen Einzelfasern provisorisch zu einem runden und dichtgepackten Bündel mechanisch zusammengehalten sind, mit Paßsitz in eine einzige metallische Hülse, die aus einem metallischen Material besteht, welches bei der Umformtemperatur des Glases eine ausreichende Warmfestigkeit aufweist, und die innen durchgehend einen kreisförmigen Querschnitt aufweist,
- Haltern des Lichtleitfaserbündels im Bereich der einzigen metallischen Hülse in einer Spannvorrichtung,
- Aufheizen des Endes des in der metallischen Hülse eingespannten Lichtleitfaserbündels auf Umformtemperatur,
- Verpressen des aufgeheizten Endes des in der metallischen Hülse eingespannten Lichtleitfaserbündels unter Umformen der Einzelfasern zu einer hexagonalen Packung und Anpressen der metallischen Hülse an diese Packung, ohne daß es zu einer Anglasung zwischen dem verschmolzenen Lichtleitfaserbündel und der metallischen Hülse kommt,
- Abkühlen des umgeformten Endes des Lichtleitfaserbündels, und
- Entfernen des Lichtleitfaserbündels aus der Spannvorrichtung,
**dadurch gekennzeichnet, daß** das Lichtleitfaserbündel in der Spannvorrichtung mittels senkrecht zur axialen Richtung des Lichtleitfaserbündels verfahrbarer Spannelemente in seiner Lage fixiert wird und auf das feststehende Ende des Lichtleitfaserbündels ein gleichzeitig als Heizelement dienendes Umformwerkzeug aufgesetzt wird, das nach Erreichen der Umformtemperatur unter Verpressen des Endes des Lichtleitfaserbündels axial abwärts bewegt wird.

2. Verfahren nach Anspruch 1, **dadurch gekennzeichnet, daß** die metallische Hülse in dem Bereich, der dem Umformprozeß ausgesetzt ist, innen und außen mit einer Beschichtung versehen wird, die innen als Trennschicht zwischen dem umgeformten Lichtleitfaserbündel und der Hülseninnenwand und außen als Schmiermittel zwischen Hülsenaußenwand und einem Verpreßwerkzeug dient.

3. Verfahren nach Anspruch 2, **dadurch gekennzeichnet, daß** als Beschichtungsmaterial in Ethanol suspendiertes Bornitrid verwendet wird.

4. Verfahren nach Anspruch 2 oder 3, **dadurch gekennzeichnet, daß** die Beschichtung durch Eintauchen der metallischen Hülse in das Beschichtungsmaterial erfolgt.

5. Verfahren nach einem der Ansprüche 1 bis 4, **dadurch gekennzeichnet, daß** die losen Einzelfasern des Lichtleitfaserbündels vor dem Einschieben in die metallische Hülse durch ein Bündel-Hilfsmittel provisorisch zu einem runden und dicht gepackten Bündel mechanisch zusammengehalten werden, wobei das Bündel-Hilfsmittel leicht manuell entfernt werden kann oder beim Einschieben in die metallische Hülse selbsttätig durch die Hülse abgestreift wird.

6. Verfahren nach einem der Ansprüche 1 bis 5, **dadurch gekennzeichnet, daß** das Aufheizen des Endes des eingeschobenen Lichtleitfaserbündels auf Umformungstemperatur durch induktiv erzeugte Wärme aufgebracht wird.

7. Verfahren nach Anspruch 6, **dadurch gekennzeichnet, daß** die Umformungstemperatur im Bereich von 600 bis 700° C liegt.

8. Verfahren nach einem der Ansprüche 1 bis 7, **dadurch gekennzeichnet, daß** das Verpressen durch Aufpressen eines Umformwerkzeuges mit vorgegebener Innenkontur erfolgt.

9. Verfahren nach Anspruch 6, **dadurch gekennzeichnet, daß** das Abkühlen des umgeformten Endes des Lichtleitfaserbündels durch allmähliche Reduzierung der zugeführten induktiven Wärme erfolgt.

10. Verfahren nach Anspruch 8 und 9, **dadurch gekennzeichnet, daß** das Umformwerkzeug auch zum Abkühlen des umgeformten Endes des Lichtleitfaserbündels verwendet wird.

11. Verfahren nach einem der Ansprüche 1 bis 10, **dadurch gekennzeichnet, daß** nach dem Einbau des Lichtleitfaserbündels in die metallische Hülse die über den Rand der Hülse überstehenden Enden der Einzelfasern randbündig abgeschnitten werden.

12. Vorrichtung zur Durchführung des Verfahrens nach einem der Ansprüche 1 bis 11, mit
- einer Spannvorrichtung (4) enthaltend senkrecht zur axialen Richtung des Lichtleitfaserbündels verfahrbare, unmittelbar an der einzigen Hülse (3), die aus einem metallischen Material besteht, welches bei der Umformtemperatur eine ausreichende Warmfestigkeit aufweist, angreifende Spannelemente zum lagefixierten Haltern des Lichtleitfaserbündels (1), das, mechanisch, provisorisch zusammengehalten, in die Hülse eingeschoben ist,
- einem axial verfahrbaren, mit einem sich in Verform-Verfahrrichtung verjüngenden Innendurchmesser versehenen, auf das feststehende Ende des in der Hülse (3) eingeschobenen Lichtleitfaserbünds (1) aufsetzbaren hohlen Umformwerkzeug (5), dem eine induktive Beheizung (6) zugeordnet ist, und dessen Innenkontur so ausgebildet ist, daß durch die Verform-Verfahrbewegung des Umformwerkzeuges das Ende des umgeformten Lichtleitfaserbündels mit der metallischen Hülse in vorgegebener Weise verpreßbar ist.

13. Vorrichtung nach Anspruch 12, **dadurch gekennzeichnet, daß** die Innenkontur des Umformwerkzeuges vom offenen Ende aus zunächst einen zylindrischen Abschnitt (5a), dessen Durchmesser nur geringfügig größer als der Außen-Durchmesser des zylindrischen, das Ende des Lichtleitfaserbündels aufnehmenden Bereiches (3c) der metallischen Hülse (3) ist, aufweist, daran anschließend einen konischen Abschnitt (5b) besitzt, an den sich ein zweiter zylindrischer Abschnitt (5c) anschließt, dessen Durchmesser dem geforderten Durchmesser des umgeformten Lichtleitfaserbündels entspricht.

14. Vorrichtung nach Anspruch 13, **dadurch gekennzeichnet, daß** die Oberflächen des konischen und des zweiten zylindrischen Abschnittes gehärtet und poliert sind.

15. Vorrichtung nach Anspruch 13 oder 14, **dadurch gekennzeichnet, daß** der Durchmesser des zweiten zylindrischen Abschnittes ca. 85 % des Ausgangsdurchmessers der metallischen Hülse (3) des Lichtleitfaserbündels beträgt.

16. Vorrichtung nach einem der Ansprüche 12 bis 15, **dadurch gekennzeichnet, daß** das Umformwerkzeug (5) becherförmig ausgebildet ist, und am Becherboden eine Entlüftungsöffnung (12) besitzt.

17. Vorrichtung nach einem der Ansprüche 12 bis 16, **dadurch gekennzeichnet, daß** das Umformwerkzeug aus magnetischem Edelstahl besteht.

18. Vorrichtung nach einem der Ansprüche 12 bis 17, **dadurch gekennzeichnet, daß** eine Temperaturregelung (7) für die Einstellung der Umformtemperatur vorgesehen ist.

## Claims

1. Process for producing an optical fibre bundle which comprises a multiplicity of individual glass fibres which at the end are pressed together in a deforming manner in a metallic sleeve with the application of temperature and pressure, comprising the steps of:
- pushing the optical fibre bundle, in which the loose individual fibres are provisionally held together mechanically to form a round, tightly packed bundle, with a snug fit into a single metallic sleeve, which consists of a metallic material that, at the deformation temperature of the glass, has a sufficient thermal stability and that has a continuous circular cross section through the inside,
- holding the optical fibre bundle in a clamping device in the region of the single metallic sleeve,
- heating the end of the optical fibre bundle which has been clamped in the metallic sleeve to its deformation temperature,
- pressing the heated end of the optical fibre bundle which has been clamped in the metallic sleeve so as to deform the individual fibres to form a hexagonal packing, and pressing the metallic sleeve onto this packing, without any fusion occurring between the melted optical fibre bundle and the metallic sleeve,
- cooling the deformed end of the optical fibre bundle, and
- removing the optical fibre bundle from the clamping device,
**characterized in that** the optical fibre bundle is fixed in position in the clamping device by means of clamping elements which are displaceable perpendicular to the axial direction of the optical fibre bundle, and a deformation tool, which simultaneously serves as a heating element and is moved axially downwards, pressing the end of the optical fibre bundle, once the deformation temperature has been reached, is fitted onto the fixed end of the optical fibre bundle.

2. Process according to Claim 1, **characterized in that** in the region which is exposed to the deformation process, the metallic sleeve is provided on the inside and outside with a coating which on the inside serves as a separating layer between the deformed optical fibre bundle and the sleeve inner wall and on the outside serves as a lubricant between the sleeve outer wall and a pressing tool.

3. Process according to Claim 2, **characterized in that** the coating material used is boron nitride suspended in ethanol.

4. Process according to Claim 2 or 3, **characterized in that** the coating is effected by dipping the metallic sleeve in the coating material.

5. Process according to one of Claims 1 to 4, **characterized in that** the loose individual fibres of the optical fibre bundle, before they are pushed into the metallic sleeve, are provisionally held together mechanically by a bundling aid to form a round, tightly packed bundle, it being possible for the bundling aid to be removed manually without difficulty or to be automatically stripped off by the metallic sleeve when the fibre bundle is pushed into the sleeve.

6. Process according to one of Claims 1 to 5, **characterized in that** the heating of the end of the optical fibre bundle which has been pushed into the sleeve to its deformation temperature is applied by inductively generated heat.

7. Process according to Claim 6, **characterized in that** the deformation temperature is in the range from 600 to 700°C.

8. Process according to one of Claims 1 to 7, **characterized in that** the pressing is carried out by pressing on a deformation tool with a predetermined internal contour.

9. Process according to Claim 6, **characterized in that** the cooling of the deformed end of the optical fibre bundle is effected by gradually reducing the inductive heat supplied.

10. Process according to Claims 8 and 9, **characterized in that** the deformation tool is also used to cool the deformed end of the optical fibre bundle.

11. Process according to one of Claims 1 to 10, **characterized in that** after the optical fibre bundle has been inserted into the metallic sleeve, those ends of the individual fibres which project beyond the edge of the sleeve are cut off until they are flush with the said edge.

12. Apparatus for carrying out the process according to one of Claims 1 to 11, having
- a clamping device (4) which includes clamping elements, which can be displaced perpendicular to the axial direction of the optical fibre bundle and act directly on the single sleeve (3), which consists of a metallic material that is sufficiently thermally stable at the deformation temperature, for holding the optical fibre bundle (1), which has been pushed mechanically, while provisionally held together, into the sleeve, in a fixed position,
- an axially displaceable, hollow deformation tool (5), which is provided with an internal diameter that tapers in the deformation displacement direction, can be fitted onto the fixed end of the optical fibre bundle (1) that has been pushed into the sleeve (3), is assigned an inductive heating (6) and the internal contour of which is designed in such a way that the end of the deformed optical fibre bundle can be pressed to the metallic sleeve in a predetermined manner by the deformation displacement movement of the deformation tool.

13. Apparatus according to Claim 12, **characterized in that** the internal contour of the deformation tool, starting from the open end, has firstly a cylindrical section (5a), the diameter of which is only slightly greater than the external diameter of the cylindrical region (3c), accommodating the end of the optical fibre bundle, of the metallic sleeve (3), followed by a conical section (5b), which is adjoined by a second cylindrical section (5c), the diameter of which corresponds to the required diameter of the deformed optical fibre bundle.

14. Apparatus according to Claim 13, **characterized in that** the surfaces of the conical section and of the second cylindrical section are hardened and polished.

15. Apparatus according to Claim 13 or 14, **characterized in that** the diameter of the second cylindrical section is approx. 85% of the starting diameter of the metallic sleeve (3) of the optical fibre bundle.

16. Apparatus according to one of Claims 12 to 15, **characterized in that** the deformation tool (5) is of cup-like design and has a vent opening (12) at the base of the cup.

17. Apparatus according to one of Claims 12 to 16, **characterized in that** the deformation tool consists of magnetic stainless steel.

18. Apparatus according to one of Claims 12 to 17, **characterized in that** a temperature control (7) is provided for setting the deformation temperature.

## Revendications

1. Procédé de fabrication d'un faisceau de fibres optiques qui se compose d'une pluralité de fibres individuelles en verre qui sont comprimées entre elles de manière à les façonner en leur extrémité dans une gaine métallique en appliquant une certaine température et une certaine pression, comprenant les étapes :
- Insertion du faisceau de fibres optiques, dans lequel les fibres individuelles détachées sont provisoirement maintenues ensemble en un faisceau rond et dense, avec ajustement de précision dans une gaine métallique unique qui se compose d'un matériau métallique qui présente une résistance à la chaleur suffisante à la température de façonnage du verre et qui présente à l'intérieur continuellement une section circulaire,
- Maintien du faisceau de fibres optiques dans un dispositif de serrage dans la zone de la gaine métallique unique,
- Chauffage de l'extrémité du faisceau de fibres optiques encastré dans la gaine métallique à la température de façonnage,
- Compression de l'extrémité chauffée du faisceau de fibres optiques encastré dans la gaine métallique en façonnant les fibres individuelles pour former un bloc hexagonal et compression de la gaine métallique sur ce bloc sans qu'il ne se produise de fusion entre le faisceau de fibres optiques fondu et la gaine métallique,
- Refroidissement de l'extrémité façonnée du faisceau de fibres optiques, et
- Retrait du faisceau de fibres optiques du dispositif de serrage,
**caractérisé en ce que** le faisceau de fibres optiques est immobilisé dans sa position dans le dispositif de serrage au moyen d'éléments de serrage pouvant être déplacés perpendiculairement au sens axial du faisceau de fibres optiques et un outil de façonnage faisant simultanément office d'élément chauffant est monté sur l'extrémité immobilisée du faisceau de fibres optiques, lequel est déplacé dans le sens axial vers le bas en comprimant l'extrémité du faisceau de fibres optiques une fois que la température de façonnage est atteinte.

2. Procédé selon la revendication 1, **caractérisé en ce que** la gaine métallique, dans la zone qui est soumise au processus de façonnage, est munie à l'intérieur et à l'extérieur d'un revêtement qui, à l'intérieur, fait office de couche de séparation entre le faisceau de fibres optiques façonné et la paroi intérieure de la gaine et, à l'extérieur, d'agent lubrifiant entre la paroi extérieure de la gaine et un outil de compression.

3. Procédé selon la revendication 2, **caractérisé en ce que** le matériau de revêtement utilisé est du nitrure de bore en suspension dans de l'éthanol.

4. Procédé selon la revendication 2 ou 3, **caractérisé en ce que** le revêtement est effectué en trempant la gaine métallique dans le matériau de revêtement.

5. Procédé selon l'une des revendications 1 à 4, **caractérisé en ce que** les fibres individuelles détachées du faisceau de fibres optiques sont maintenues ensemble mécaniquement provisoirement par un auxiliaire de faisceau en un faisceau rond et compact, l'auxiliaire de faisceau pouvant être facilement retiré manuellement ou étant retiré automatiquement par la gaine lors de l'insertion dans la gaine métallique.

6. Procédé selon l'une des revendications 1 à 5, **caractérisé en ce que** l'échauffement à la température de façonnage de l'extrémité du faisceau de fibres optiques insérée est effectué par une chaleur produite de manière inductive.

7. Procédé selon la revendication 6, **caractérisé en ce que** la température de façonnage est comprise entre 600 et 700 °C.

8. Procédé selon l'une des revendications 1 à 7, **caractérisé en ce que** la compression est effectuée en pressant un outil de façonnage ayant un contour intérieur prédéfini.

9. Procédé selon la revendication 6, **caractérisé en ce que** le refroidissement de l'extrémité façonnée du faisceau de fibres optiques s'effectue par une réduction graduelle de la chaleur inductive amenée.

10. Procédé selon la revendication 8 ou 9, **caractérisé en ce que** l'outil de façonnage est également utilisé pour refroidir l'extrémité façonnée du faisceau de fibres optiques.

11. Procédé selon l'une des revendications 1 à 10, **caractérisé en ce qu'**après l'insertion du faisceau de fibres optiques dans la gaine métallique, les extrémités des fibres individuelles qui dépassent du bord de la gaine sont coupées à ras du bord.

12. Dispositif pour mettre en oeuvre le procédé selon l'une des revendications 1 à 11, comprenant
- des éléments de serrage par saisie comprenant un dispositif de serrage (4) pouvant être déplacé perpendiculairement au sens axial du faisceau de fibres optiques directement sur la gaine unique (3), laquelle se compose d'un matériau métallique qui présente une résistance à la chaleur suffisante à la température de façonnage, pour maintenir en position fixe le faisceau de fibres optiques (1) qui est inséré dans la gaine en étant maintenu ensemble mécaniquement provisoirement,
- un outil de façonnage creux pouvant être déplacé dans le sens axial, muni d'un diamètre intérieur qui se rétrécit dans le sens du déplacement de façonnage, pouvant être monté sur l'extrémité immobile du faisceau de fibres optiques (1) inséré dans la gaine (3), auquel est associé un chauffage inductif (6) et dont le contour intérieur est configuré de telle sorte que le mouvement de déplacement de façonnage de l'outil de façonnage (5) peut comprimer l'extrémité du faisceau de fibres optiques façonnée avec la gaine métallique d'une manière prédéfinie.

13. Dispositif selon la revendication 12, **caractérisé en ce que** le contour intérieur de l'outil de façonnage, à partir de l'extrémité ouverte, présente tout d'abord une section cylindrique (5a) dont le diamètre n'est que légèrement supérieur au diamètre extérieur de la zone cylindrique (3c) de la gaine métallique (3) qui reçoit l'extrémité du faisceau de fibres optiques, possède une section conique (5b) qui vient s'y rattacher et à laquelle vient se rattacher une deuxième section cylindrique (5c) dont le diamètre correspond au diamètre requis du faisceau de fibres optiques façonné.

14. Dispositif selon la revendication 13, **caractérisé en ce que** la surface de la section conique et de la deuxième section cylindrique est trempée et polie.

15. Dispositif selon la revendication 13 ou 14, **caractérisé en ce que** le diamètre de la deuxième section cylindrique est égal à environ 85 % du diamètre extérieur de la gaine métallique (3) du faisceau de fibres optiques.

16. Dispositif selon l'une des revendications 12 à 15, **caractérisé en ce que** l'outil de façonnage (5) est réalisé en forme de godet et possède un orifice de purge (12) dans le fond du godet.

17. Dispositif selon l'une des revendications 12 à 16, **caractérisé en ce que** l'outil de façonnage se compose en acier inoxydable magnétique.

18. Dispositif selon l'une des revendications 12 à 17, **caractérisé en ce qu'**il est prévu un régulateur de température (7) pour le réglage de la température de façonnage.
